# EUROPEAN PATENT APPLICATION

(11) **EP 0 742 624 A1**
(43) Date of publication of application: **13.11.1996**
(21) Application number: 95106562.2
(22) Date of filing: 02.05.1995
(51) Int. Cl.: H02G 1/08

(54) **A device for inserting a bundle of cables into a protective conduit of plastics material**

(71) Applicant: SIX TAU S.p.A., I-10129 Torino (IT)
(72) Inventor: Culasso, Giorgio, I-10080 San Benigno Canavese (IT)
(74) Representative: Marchitelli, Mauro

(57) **Abstract**

A device for inserting a bundle of cables (22) in a protective conduit (24) of plastics material having a longitudinal through slot (26) comprises a spreader body (28) formed so as to keep a portion of the slot (26) in an opened-out position in an output portion of the device. The bundle of cables (22) is inserted in the conduit (24) progressively as a result of relative movement between the conduit (24) and the device.

## Description

The present invention relates to a device for inserting a bundle of cables into a protective conduit of plastics material having a longitudinal through slot.

A typical field of application of the device according to the invention is that of the preparation of wiring harnesses for the automotive industry. The wiring harnesses which interconnect the various electrical devices of a vehicle and the switching and control devices are generally prepared off the vehicle-assembly line and are provided with quick-fit connectors.

A particularly important aspect for the purposes of the reliability of the wiring harness is that of the mechanical protection of the cables. Generally, no particular precautions are taken to protect the wiring harness, and localized binding is simply carried out by means of adhesive tapes or the like having the purpose simply of holding the wiring harness in a certain position, no care being taken to provide mechanical protection against outside agents.

The use of protective conduits of plastics material, for example, of the corrugated type, for protecting electrical cables is already known. Protective conduits having longitudinal through slots for enabling cables or wiring harnesses to be inserted in the respective protective conduit even when the cables are fixed permanently to connectors which would not be able to pass through the conduit are also known. However, the use of protective conduits of plastics material in the automotive industry is not very widespread, particularly because of the large amount of time required for the operations to insert wiring harnesses inside protective conduits and the high cost which these operations involve.

The object of the present invention is to provide a device which enables the operation of inserting a bundle of cables in a protective conduit having a longitudinal slot to be carried out easily and quickly.

According to the present invention, this object is achieved by a device having the characteristics which form the subject of Claim 1.

Further characteristics and advantages of the present invention will become clear in the course of the following detailed description given purely by way of non-limiting example, with reference to the appended drawings, in which :
Figures 1 and 2 are perspective views showing equipment provided with a device according to the invention, in two separate stages of operation,
Figures 3-7 show equipment including a device according to the invention associated with a device for preparing and/or checking wiring harnesses,
Figure 8 is a perspective view of a device according to the invention,
Figure 9 is a section taken on the line IX-IX of Figure 8 during the insertion of a wiring harness in a conduit,
Figure 10 is an exploded, perspective view of the device of Figure 8, and
Figure 11 is a perspective view of the device of Figure 8, from which some parts have been removed to facilitate an understanding of its operation, during the insertion of a wiring harness.

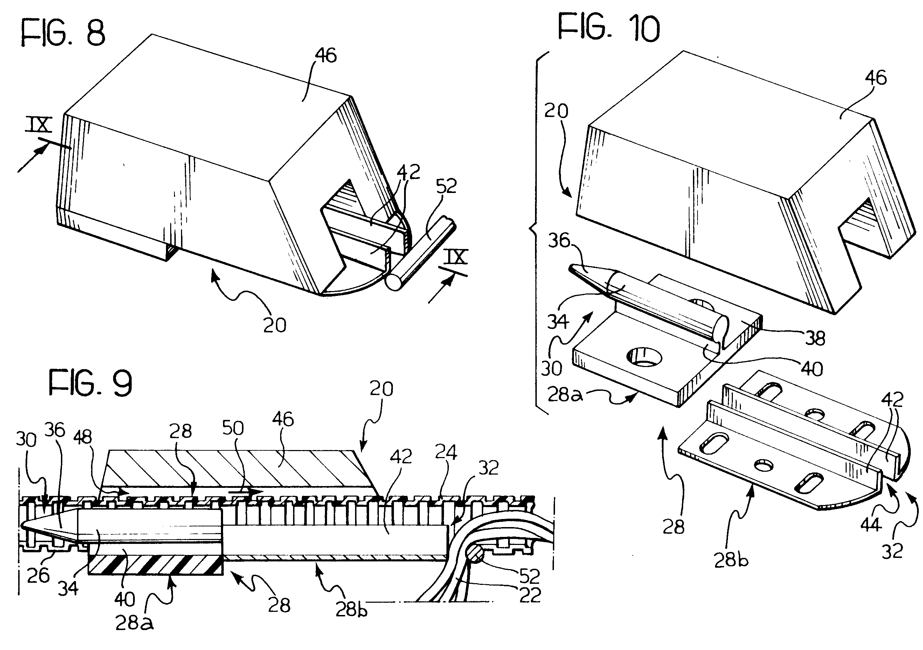

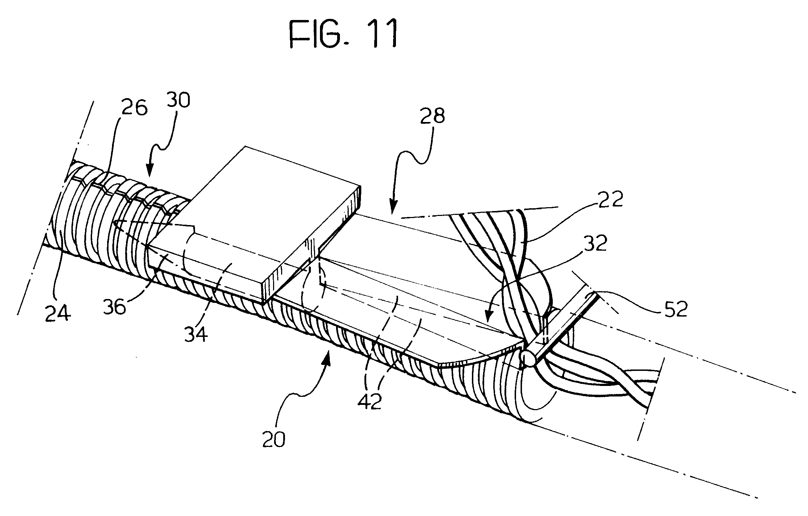

Reference is made initially to Figures 8-11, in which the device according to the invention, indicated 20, is shown separately from the rest of the equipment as a whole. The device 20 serves to insert a wiring harness 22 (Figures 9 and 11) into a protective conduit 24 of corrugated plastics material having a longitudinal through slot 26.

With reference to Figures 9 and 10 in particular, the device 20 comprises a spreader body 28 having an input portion 30 and an output portion 32. In the embodiment shown in the drawings, the spreader body 28 is constituted by two parts indicated 28a and 28b; however, this characteristic is not essential for the purposes of the present invention and the spreader body may be formed in a single piece, the functionality of the device remaining unchanged. The first part 28a has a substantially cylindrical element 34 with a tapered end 36. The cylindrical element 34 is spaced from a flat base 38 and is connected thereto by means of a rib 40. The second part 28b of the spreader body 28 has two diverging spreader walls 42 between which is defined a through channel 44 which is wider in the output portion 32.

With reference to Figures 8-10, the device 20 also comprises an element 46 with a channel section, to which the parts 28a and 28b of the spreader body 28 are fixed.

As can be seen in Figure 9 in particular, the element 46, in combination with the spreader body 28, defines a duct 48 through which the conduit 24 is free to slide in the direction indicated by the arrow 50. In use, the conduit 24 is inserted in the duct 48 by hand, starting from the input portion 30. The tapered end 36 of the element 34 centres the conduit. The longitudinal slot 26 in the conduit 24 has to be positioned adjacent the rib 40 so that the rib 40 is inserted in the slot 26 when the conduit 24 is urged into the duct 48. The cylindrical element 34 is placed inside the conduit and has a restraining and guiding effect on the internal surface of the conduit 24. The channel element 46, on the other hand, has a restraining and guiding effect on the outer surface of the conduit 24.

As the conduit 24 is advanced in the direction indicated by the arrow 50 in Figure 9, the end of the conduit encounters the spreader walls 42 and the edges of the slot 26 are positioned on the outer surfaces of these walls. As the conduit 24 continues to move gradually in the direction indicated by the arrow 50, the slot 26 is thus opened out progressively until it reaches the most opened-out position in the output portion 32. The part of the conduit which is moving away from the output portion 32 in the direction of advance of the conduit closes resiliently to return the edges of the slot 26 to the closed position.

The device described hitherto thus enables the portion of the conduit 24 which is in the output portion 32 at any particular time to be opened out resiliently by virtue of a relative movement between the spreader body 28 and the conduit 24. At this point, in order to insert the wiring harness 22 in the conduit 24, it suffices to hold the wiring harness 22 in a stationary position relative to the spreader body 28 adjacent the output portion 32. For this purpose, it suffices to place the wiring harness 22 in front of the output portion 32, holding it in position by means of a restraining member 52. The restraining member 52 is constituted simply by a pin or bar which extends in front of the output portion 32 transverse the spreader walls 42. The member 52 is preferably movable between a retracted, inoperative position and an operative, restraining position in which it is situated in the position shown in Figure 9. As can be seen in this drawing, a space is defined between the restraining member 52 and the front ends of the spreader walls 42 and the wiring harness 22 extends therein. As the conduit 24 moves in the direction indicated by the arrow 50 in Figure 9, it slides over the outer surface of the restraining member 52 and undergoes slight resilient deformation in order to follow the deviation imposed by the presence of the restraining member 52.

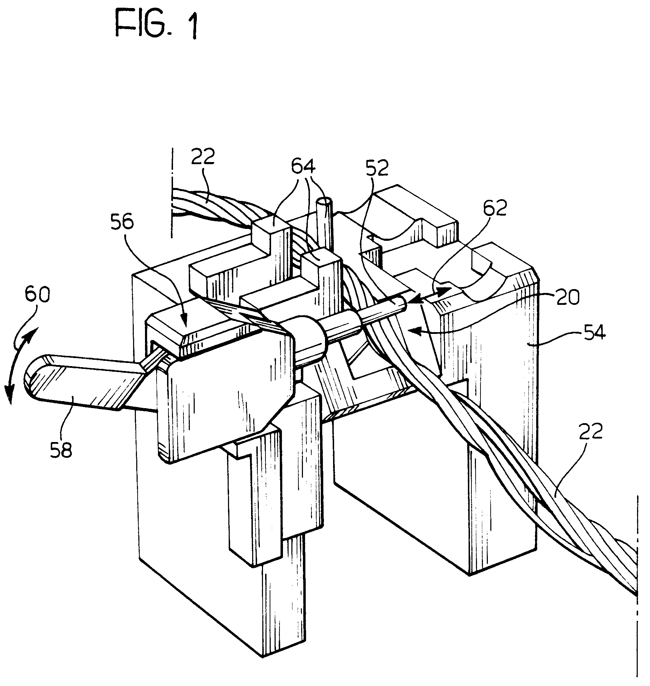

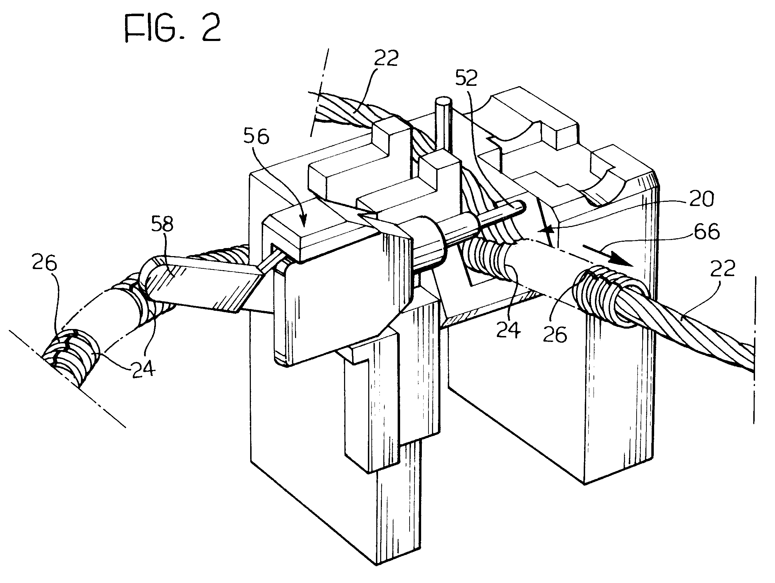

A first example of the practical use of the device 20 described above will now be described with reference to Figures 1 and 2. In this embodiment, the device 20 is carried in a stationary manner by a base 54 having a lever mechanism 56 which controls the movement of the restraining member 52 between the operative and inoperative positions. Pivoting of the lever 58 in the senses indicated by the double arrow 60 moves the restraining member 52 in the directions indicated by the double arrow 62. First of all, the restraining member 52 is brought to an inoperative position by the operation of the lever 58 so as to leave the region in front of the output portion of the device 20 clear. In this condition, the wiring harness 22 is positioned on the base 54 between stationary locating projections 64 so that it extends in front of the output portion of the device 20. After the wiring harness 2 has been thus positioned, the lever 60 is operated to bring the restraining member 52 to the operative position. Figure 1 shows the equipment upon completion of this step, when the wiring harness 22 is ready for insertion in a protective conduit.

With reference to Figure 2, the protective conduit 24 is passed through the device 20 from the input portion of the device, which is in the rear portion of the equipment in the view of Figure 2. The conduit 24 is advanced in the direction indicated by the arrow 66, both the equipment and the wiring harness 22 being kept stationary. The wiring harness 22 is introduced progressively into the conduit 24 through the opened-out portion of the slot 26. Insertion in the conduit is completed when the entire length of the protective conduit 24 has passed through the device 20. To remove the wiring harness with its protective conduit 24 from the equipment, it suffices to release the wiring harness 22 by the operation of the lever 58.

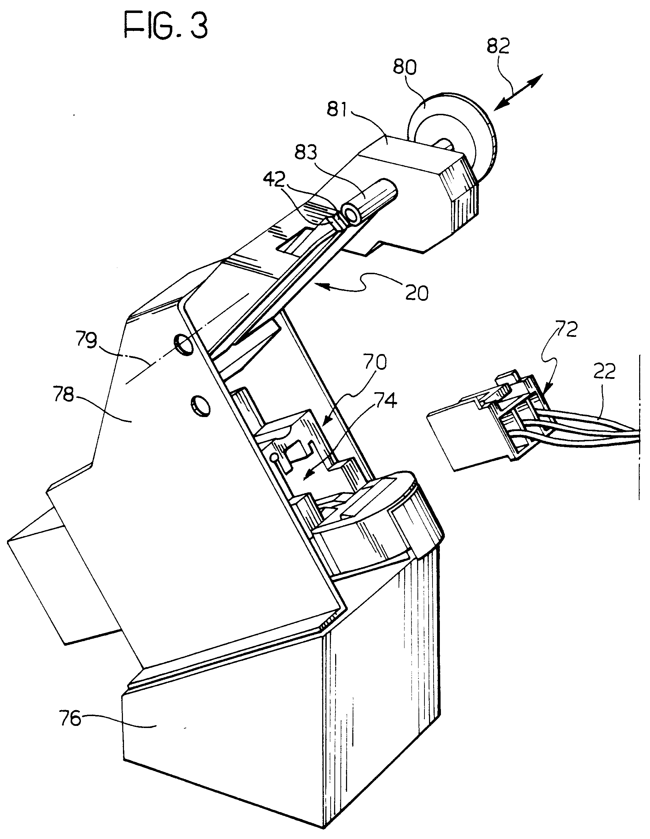

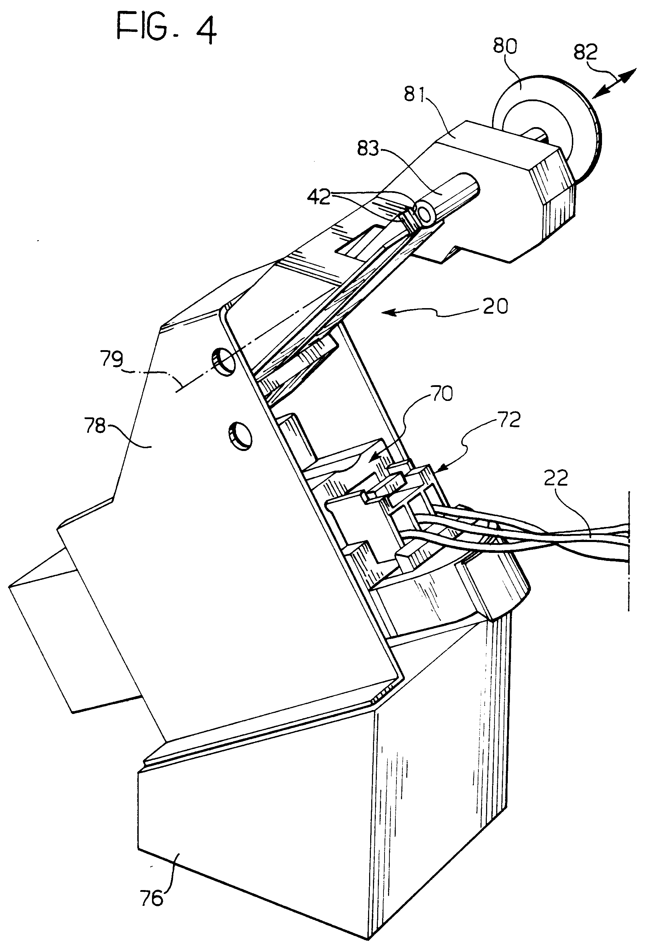

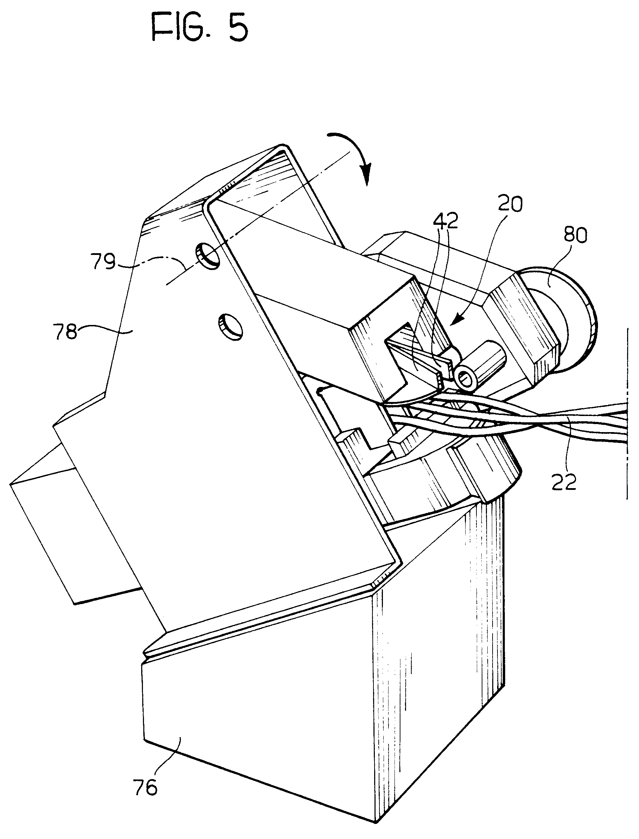

A second practical example of the use of the device according to the invention will now be described with reference to Figures 3-7. In this second example of use, the device 20 is associated with a device 70 for preparing and checking wiring harnesses 22 associated with cellular connectors 72. The device 70 is of known type and comprises a seat 74 for housing and restraining a cellular connector 72 during the operations to prepare and/or check the wiring harness. In the embodiment of Figure 3, the connector 72 is already connected to the end of the wiring harness 22, but this connection will generally take place whilst the connector 72 is restrained in the seat 74 in the device 70. In any case, upon completion of the preparation and/or checking operations, the equipment is as shown in Figure 4, with the connector 72 locked in the seat in the device 70. The device 70 for preparing and checking the wiring harnesses is carried in a stationary manner by a base 76 to which a box flange 78, which carries the device 20 so that it can pivot about an axis 79, is fixed.

In the position shown in Figures 3 and 4, the device 20 is in an inoperative position. An extension 81 which is in a stationary position relative to the device 20, carries a tubular guide 83 in which the member 52 which restrains the wiring harness 22 is movable. The restraining member 52 can slide inside the tubular guide 83 and is operated by a push-button 80 movable in the directions indicated by the double arrow 82.

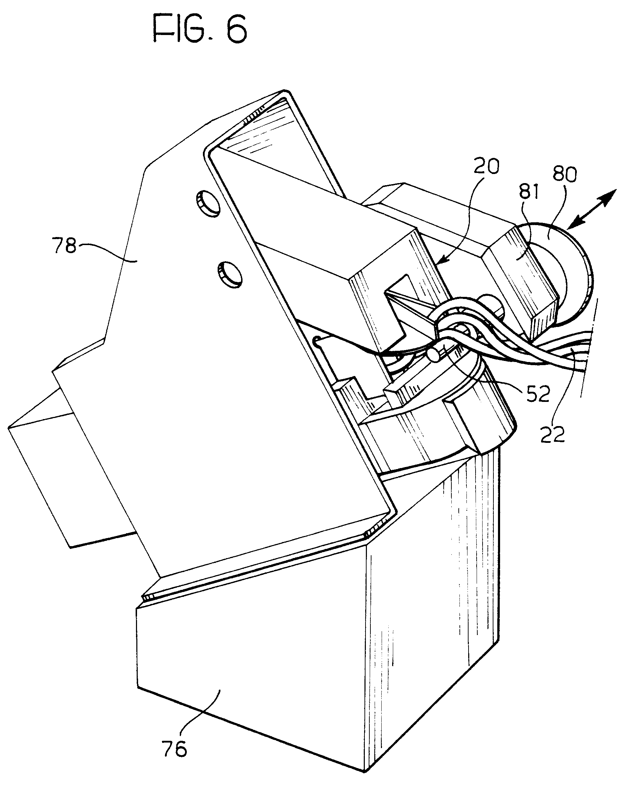

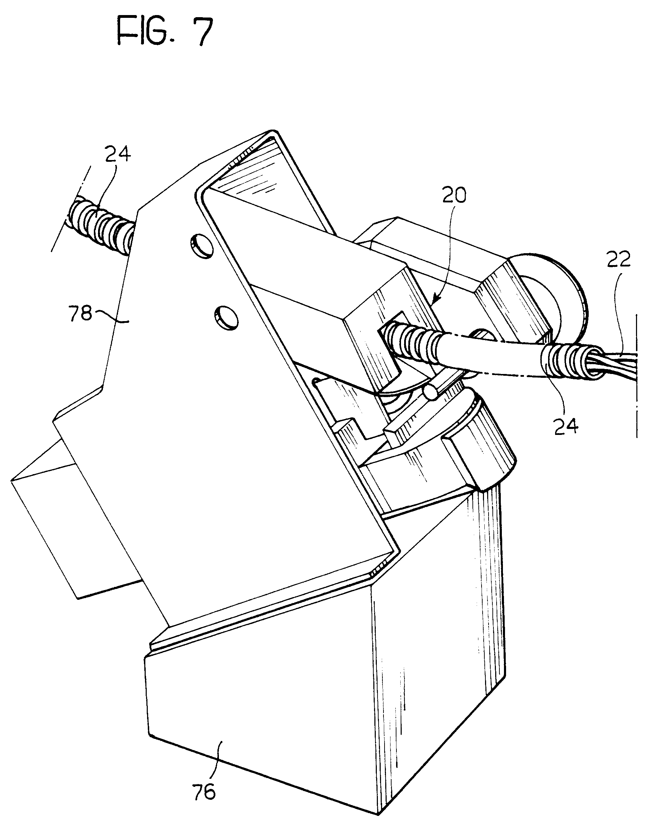

After the wiring harness has been positioned with its connector 72 as shown in Figure 4, the device 20 is brought to the operative position by a pivoting movement about the axis 79. The wiring harness 22 is then positioned adjacent the output portion of the device 20 and the retaining member 52 is brought to the operative position by the operation of the push-button 80. The wiring harness 22 is then in the configuration shown in Figure 6, relative to the device 20. A protective conduit 24 is then introduced, starting from the input portion of the device 20, as shown in Figure 7, by being advanced manually in the direction indicated by the arrow 84 in Figure 7. In this embodiment, the wiring harness 22 is also inserted in the conduit 24 progressively as the conduit gradually passes through the device 20. When the entire length of the conduit has passed through the device 20, the insertion of the wiring harness 22 will be complete.

## Claims

1. A device for inserting a bundle of cables (22) in a protective conduit (24) of plastics material having a longitudinal through slot (26), characterized in that it comprises a spreader body (28) onto which the conduit (24) in which the bundle of cables (22) is to be inserted is intended to be slid, the spreader body (28) having an input portion (30) starting from which the conduit (24) is fitted, and an output portion (32) adjacent which the bundle of cables (22) is restrained in a stationary position, the spreader body (28) being formed so as to keep a portion of the slot (26) in an opened-out position, at least in the output portion (32), so that the bundle of cables (22) is progressively inserted in the conduit (24) as a result of a relative movement between the conduit (24) and the spreader body (28).

2. A device according to Claim 1, characterized in that the spreader body (28) comprises a part (34) disposed in the input portion (30) for restraining and guiding the conduit (24) and a part (42) which widens in the output portion (32) for progressively opening out the slot.

3. A device according to Claim 2, characterized in that the part for restraining and guiding the conduit (24) has a cylindrical element (34) connected to a base (38) by means of a rib (40) which is disposed in the slot (26) in the conduit (24) in use.

4. A device according to Claim 2, characterized in that the progressive-opening part has a pair of walls (42) which diverge towards the output portion (32) and between which a through channel (44) is defined.

5. A device according to any one of the preceding claims, characterized in that it comprises restraining means (52) for holding the bundle of cables (22) stationary adjacent the output portion (32) of the spreader body (28).

6. A device according to Claim 5, characterized in that the restraining means comprise a retractible bar element (52) movable between an inoperative position and an operative position in which it extends in front of the output portion (32) of the spreader body (28).

7. A device according to any one of the preceding claims, characterized in that it comprises an element (46) with a channel section which at least partially surrounds the spreader body (28) so as to form an external restraining guide for the portion of the conduit which is engaged by the spreader body (28).

8. A device according to any one of the preceding claims, characterized in that the device is associated with a unit for preparing and checking connectors (70) and is movable relative to the unit between an operative position and an inoperative position.
